# EUROPÄISCHE PATENTSCHRIFT

(11) **EP 2 428 391 B1**
(45) Veröffentlichungstag und Bekanntmachung des Hinweises auf die Patenterteilung: **18.06.2014**
(21) Anmeldenummer: 11450117.4
(22) Anmeldetag: 08.09.2011
(51) Int. Cl.: B60M 1/24

(54) **Fahrdrahtklemme für Oberleitungskreuzungen**
Contact wire clamp for overhead cable crossings
Pince de fil conducteur pour croisements de conduites supérieures

(30) Priorität: 14.09.2010 AT 15322010
(43) Veröffentlichungstag der Anmeldung: 14.03.2012
(73) Patentinhaber: Röhl, Jan, 2500 Siegenfeld (AT)
(72) Erfinder: Winter, Hubert, 8811 Scheifling (AT)
(74) Vertreter: Rippel, Andreas

(56) Entgegenhaltungen:
- FR-A- 1 153 873
- US-A- 2 240 986

## Beschreibung

Die Erfindung bezieht sich auf eine Fahrdrahtklemme für Oberleitungskreuzungen für elektrisch betriebene Schienenfahrzeuge, deren durch eine Schraube betätigte Klemmbacken den Fahrdraht der Hauptgleise festklemmen.

Im Fahrleitungsbereich treten Kreuzungen von Fahrdrähten besonders bei Weichen und sonstigen Schienenkreuzungen auf. In diesen Bereichen besteht die Gefahr, dass der Stromabnehmer den oberen Fahrdraht im Kreuzungsbereich anhebt, während der untere Fahrdraht in seiner Position verharrt. Ohne eine entsprechende Vorrichtung würde der Stromabnehmer sich in diesem Fall im unteren Fahrdraht verfangen und schwere Schäden an Fahrleitung und Triebfahrzeug verursachen. Daher wird in solchen Bereichen der Fahrleitung eine Vorrichtung benötigt, welche die beiden Fahrdrähte in der vertikalen Ebene zusammenhält, in der horizontalen Ebene jedoch eine Längsbewegung zulässt. Diese Längsbewegung wird durch die Ausdehnung der Fahrdrähte entsprechend der Außentemperatur und im Zusammenhang mit den mit den Fahrdrähten verbundenen automatischen Abspannvorrichtungen verursacht. Zusätzlich sollte diese Verbindung, wie alle anderen Komponenten, die im Kettenwerk einer Fahrleitung hängen, möglichst leicht sein, damit der Stromabnehmer keine durch Massenkonzentration verursachten »harten" Stellen am Fahrdraht vorfindet.

Bisher werden in solchen Fällen fast ausschließlich sogenannte Kreuzungsstäbe verwendet, welche rahmenförmig am unteren Fahrdraht festgeklemmt werden. Diese bis zu 2500mm langen Vorrichtungen verhindern eine vertikale Trennung der Fahrdrähte und erlauben gleichzeitig eine Längsbewegung derselben. Diese Kreuzungsstäbe bringen jedoch Probleme beim Platzbedarf, Gewicht, der Festigkeit des Stabes, den Kosten, Montageaufwand etc.

Doppelklemmen, wie sie z.B. in der US 2 240 986 A beschrieben sind und zwei untereinander parallel verlaufende Fahrdrähte festklemmen, sind bei Oberleitungskreuzungen nicht brauchbar.

Die Erfindung hat es sich zum Ziel gesetzt, eine Fahrdrahtklemme für Oberleitungskreuzungen für elektrisch betriebene Schienenfahrzeuge zu schaffen, welche die aufgezeigten Nachteile der Kreuzungsstäbe vermeidet.

Erreicht wird dies bei einer Fahrdrahtklemme der eingangs genannten Art dadurch, dass zwischen den beiden Klemmbacken eine Durchgangsöffnung für den auf dem Fahrdraht der Hauptgleise aufliegenden Fahrdraht der kreuzenden Gleise angeordnet ist, wobei dieser aufliegende Fahrdraht sowohl in Längsrichtung als auch winkelig zum Fahrdraht der Hauptgleise beweglich ist.

Durch die erfindungsgemäße Lösung entfällt der Kreuzungsstab und es sind beliebig kleine Kreuzungswinkel problemlos möglich.

Im Rahmen der Erfindung ist es zweckmäßig, wenn die seitlichen Kanten der beiden Klemmbacken flügelförmig nach außen gebogen sind. Dadurch wird eine eventuelle Beschädigung der Fahrdrähte wirkungsvoll vermieden.

Nach einem weiteren Merkmal der Erfindung ist das den Fahrdrähten gegenüberliegende Ende der Klemme zur Aufnahme einer Kausche eines Hängerseils ausgebildet.

Die Fahrdrahtkreuzung fungiert dadurch auch als Hänger, wodurch der übliche und notwendige Abstand zum nächsten Hänger eingehalten werden kann und sich dadurch der horizontale Abstand zwischen den Fahrdrähten auf ein ausreichendes Maß vergrößert, um Beschädigungen durch Kollision mit Hängeklemmen zu verhindern.

Nachstehend ist die Erfindung anhand eines in den Zeichnungen dargestellten Ausführungsbeispieles näher beschrieben ohne auf diese Beispiel beschränkt zu sein. Dabei zeigen:

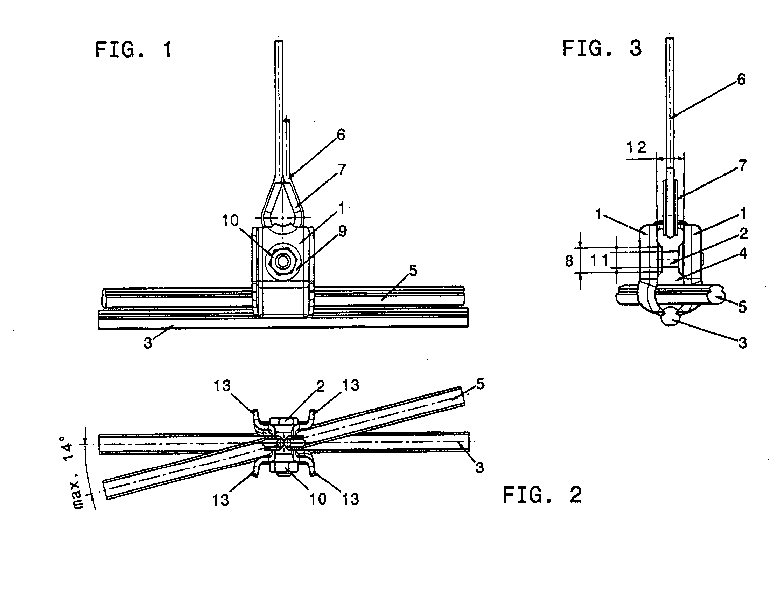

- Fig. 1: eine Seitenansicht einer erfindungsgemäß ausgebildeten Oberleitungskreuzung;
- Fig. 2: die Draufsicht auf die Kreuzung nach Fig. 1;
- Fig. 3: eine Seitenansicht der Kreuzung nach Fig. 1;

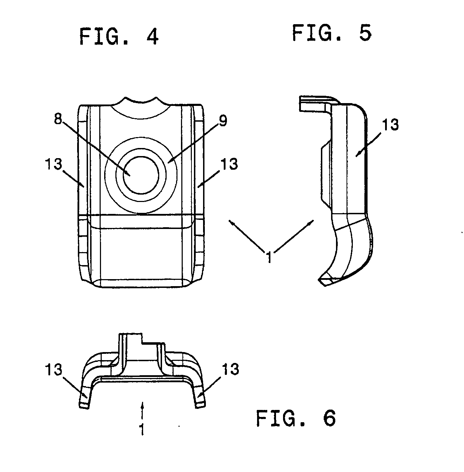

- Fig. 4: in vergrößertem Maßstab die Ansicht einer erfindungsgemäßen Fahrdrahtklemme;
- Fig. 5: eine Seitenansicht der Klemme nach Fig. 4 und
- Fig. 6: eine Draufsicht auf die Klemme nach den Fig. 4 und 5.

Gemäß den Zeichnungen besteht eine erfindungsgemäße Fahrdrahtklemme aus zwei symmetrischen Klemmenhälften 1 bzw. Klemmbacken, die in der Mitte durch eine Schraube 2 miteinander verbunden sind. Die Klemme klemmt den Fahrdraht 3 der Hauptgleise und ist mit einer Durchgangsöffnung (Ausbauchung) 4 für den Fahrdraht 5 der kreuzenden Gleise versehen.

Der kreuzende Fahrdraht 5 liegt auf dem Fahrdraht 3 der Hauptgleise auf und ist der Länge nach möglichst reibungsfrei verschiebbar. In der Höhe ist er durch die Schraube 2 der Klemmenhälften 1 im Anhub begrenzt und seitlich, durch die Klemmenhälften 1, im Kreuzungspunkt positioniert.

Die Klemme nimmt an der oberen Seite ein Hängerseil 6 mit Hilfe einer Kausche 7 auf.

Rund um das Schraubenloch 8 befindet sich eine nach innen geprägte Kegelform 9 zwecks Schraubensicherung, da sich die Mutter 10 der Niro-Schraube in das in Relation weichere Kupfer der Klemme verkeilt. Um eine Verwendung für verschiedene Durchmesser von Fahrdrähten zu ermöglichen, sind die Durchgangsöffnungen 8 für die Schraube 2 in beiden Klemmbacken 1 größer als der Außendurchmesser 11 der Schraube, wodurch der Abstand 12 der beiden Klemmbacken verstellbar ist.

Die Kanten 13 der beiden Klemmbacken 1 sind flügelförmig nach außen gebogen. Dadurch wird vermieden, dass der Fahrdraht 5 der kreuzenden Gleise durch eine scharfe Kante eventuell beschädigt wird.

Im Rahmen der Erfindung sind zahlreiche Abänderungen möglich, insbesondere kann die Form der Klemme anders als dargestellt gewählt werden, um die Öffnung für den Durchgang des Fahrdrahtes 5 der kreuzenden Gleise zu schaffen.

## Patentansprüche

1. Fahrdrahtklemme für Oberleitungskreuzungen für elektrisch betriebene Schienenfahrzeuge, deren durch eine Schraube (2) betätigte Klemmbacken (1) den Fahrdraht (3) der Hauptgleise festklemmen, **dadurch gekennzeichnet, dass** zwischen den beiden Klemmbacken (1) eine Durchgangsöffnung (4) für den auf dem Fahrdraht (3) der Hauptgleise aufliegenden Fahrdraht (5) der kreuzenden Gleise angeordnet ist wobei dieser aufliegende Fahrdraht (5) sowohl in Längsrichtung als auch winkelig zum Fahrdraht (3) der Hauptgleise beweglich ist.

2. Fahrdrahtklemme nach Anspruch 1, **dadurch gekennzeichnet, dass** die seitlichen Kanten (13) der beiden Klemmbacken (1) flügelförmig nach außen gebogen sind.

3. Fahrdrahtklemme nach Anspruch 1 oder 2, **dadurch gekennzeichnet, dass** das den Fahrdrähten (3, 5) gegenüberliegende Ende der Klemme zur Aufnahme einer Kausche (7) eines Hängerseils (6) ausgebildet ist.

## Claims

1. A contact wire clamp for overhead crossings for electrically operated rail vehicles, wherein the jaws (1) of said contact wire clamp are actuated by a screw (2) and clamp the contact wire (3) of the main tracks, **characterized in that** a through-opening (4) for the contact wire (5) of the crossing tracks, which lies on the contact wire (3) of the main tracks, is arranged between the two jaws (1), and wherein this contact wire (5) of the crossing tracks can be moved in the longitudinal direction of the contact wire (3) of the main tracks, as well as angular thereto.

2. The contact wire clamp according to Claim 1, **characterized in that** the lateral edges (13) of the two jaws (1) are bent outward in the shape of wings.

3. The contact wire clamp according to Claim 1 or 2, **characterized in that** the end of the clamp that lies opposite of the contact wires (3, 5) is designed for accommodating a thimble (7) of a dropper cable (6).

## Revendications

1. Serre-caténaire pour croisements de lignes aériennes pour véhicules ferroviaires électriques, dont les mâchoires de serrage (1) actionnées par une vis (2) serrent la caténaire (3) des voies principales, **caractérisé en ce que**, entre les deux mâchoires de serrage (1), est disposé un orifice de passage (4) pour la caténaire (5) reposant sur la caténaire (3) des voies principales qui la croisent, cette caténaire (5) reposant dessus étant mobile aussi bien dans le sens longitudinal qu'en angle par rapport à la caténaire (3) des voies principales.

2. Serre-caténaire selon la revendication 1, **caractérisée en ce que** les arêtes latérales (13) des deux mâchoires de serrage (1) sont recourbées vers l'extérieur en forme d'ailes.

3. Serre-caténaire selon la revendication 1 ou 2, **caractérisée en ce que** l'extrémité opposée aux caténaires (3, 5) du serre-caténaire est conçue pour recevoir une cosse (7) d'un fil pendule (6).
